# EUROPEAN PATENT SPECIFICATION

(11) **EP 3 551 393 B1**
(45) Date of publication and mention of the grant of the patent: **14.10.2026**
(21) Application number: 16923912.6
(22) Date of filing: 12.12.2016
(51) Int. Cl.: G06N 3/008, G06N 5/022, B25J 9/16, G10L 15/22

(54) **ROBOT GESTURE GENERATION**
ROBOTERGESTENERZEUGUNG
GÉNÉRATION DE GESTES DE ROBOT

(43) Date of publication of application: 16.10.2019
(73) Proprietor: Microsoft Technology Licensing, LLC, Redmond, WA 98052-6399 (US)
(72) Inventor: IKEUCHI, Katsushi, Beijing 100080 (CN); HABIB, Mona Soliman, Redmond, WA 98052 (US)
(74) Representative: Grünecker Patent- und Rechtsanwälte PartG mbB
(86) International application number: PCT/CN2016/109547
(87) International publication number: WO 2018/107343

(56) References cited:
- WO-A2-2015/158887
- CN-A- 102 596 516
- CN-A- 103 119 644
- CN-A- 105 930 785
- VICTOR NG-THOW-HING ET AL: "Synchronized gesture and speech production for humanoid robots", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 4617 - 4624, XP031920939, ISBN: 978-1-4244-6674-0, DOI: 10.1109/IROS.2010.5654322
- AMIR ALY ET AL: "A model for synthesizing a combined verbal and nonverbal behavior based on personality traits in human-robot interaction", HUMAN-ROBOT INTERACTION, IEEE PRESS, 445 HOES LANE, PO BOX 1331, PISCATAWAY, NJ 08855-1331 USA, 3 March 2013 (2013-03-03), pages 325 - 332, XP058013838, ISBN: 978-1-4673-3055-8, DOI: 10.1109/HRI.2013.6483606
- YUSUKE OKUNO ET AL: "Providing route directions: Design of robot's utterance, gesture, and timing", HUMAN-ROBOT INTERACTION (HRI), 2009 4TH ACM/IEEE INTERNATIONAL CONFERENCE ON, IEEE, 2 PENN PLAZA, SUITE 701 NEW YORK NY 10121-0701 USA, 11 March 2009 (2009-03-11), pages 53 - 60, XP032214655, ISBN: 978-1-60558-404-1
- JAEWOO KIM ET AL: "Automated robot speech gesture generation system based on dialog sentence punctuation mark extraction", SYSTEM INTEGRATION (SII), 2012 IEEE/SICE INTERNATIONAL SYMPOSIUM ON, IEEE, 16 December 2012 (2012-12-16), pages 645 - 647, XP032323466, ISBN: 978-1-4673-1496-1, DOI: 10.1109/SII.2012.6427293
- SARGIN M E ET AL: "Combined Gesture-Speech Analysis and Speech Driven Gesture Synthesis", PROCEEDINGS / 2006 IEEE INTERNATIONAL CONFERENCE ON MULTIMEDIA AND EXPO, ICME 2006 : JULY 9 - 12, 2006, HILTON, TORONTO, TORONTO, ONTARIO, CANADA, IEEE SERVICE CENTER, PISCATAWAY, NJ, 9 July 2006 (2006-07-09), pages 893 - 896, XP032964887, ISBN: 978-1-4244-0366-0, DOI: 10.1109/ICME.2006.262663
- KATSUSHI IKEUCHI ET AL: "Describing upper body motions based on the Labanotation for learning-from-observation robots", 18 September 2016 (2016-09-18), XP055708286, Retrieved from the Internet <URL:https://arxiv.org/ftp/arxiv/papers/1609/1609.05429.pdf> [retrieved on 20200626]
- SEO JU-HWAN ET AL: "Autonomous Humanoid Robot Dance Generation System based on real-time music input", 2013 IEEE RO-MAN, IEEE, 26 August 2013 (2013-08-26), pages 204 - 209, XP032502190, ISSN: 1944-9445, [retrieved on 20131010], DOI: 10.1109/ROMAN.2013.6628446

## Description

### BACKGROUND

Numerous types of robots have been used in a wide variety of applications. Traditionally, robots are mainly used in industrial applications. Recently, more and more robots have been utilized in the field of human-robot interaction, such as robots that are used in family service and medical service. With such trend, how to realize a more natural and smoother communication between a human being and a robot attracts more attention.

WO2015158887A2 discloses a method of performing a dialogue between a humanoid robot (R) and at least one user (U) comprising the following steps, carried out iteratively by said humanoid robot: i) acquiring a plurality of input signals (s1, s2) from respective sensors (c1, c2), at least one said sensor being a sound sensor and at least one other sensor being a motion or image sensor; ii) interpreting the acquired signals to recognize a plurality of events (EVI) generated by said user, selected from a group comprising: the utterance of at least a word or sentence, an intonation of voice, a gesture, a body posture, a facial expression; iii) determining a response of said humanoid robot, comprising at least one event (EVO) selected from a group comprising: the utterance of at least a word or sentence, an intonation of voice, a gesture, a body posture, a facial expression; iv ) generating, by said humanoid robot, said or each said event; characterized in that said step iii) comprises determining said response as a function of at least two events jointly generated by said user and recognized at said step ii), of which at least one is not a word or sentence uttered by said user. A computer program product and a humanoid robot for carrying out such a method.
VICTOR NG-THOW-HING ET AL: "Synchronized gesture and speech production for humanoid robots", INTELLIGENT ROBOTS AND SYSTEMS (IROS) 2010 IEEE/RSJ INTERNATIONAL CONFERENCE ON, IEEE, PISCATAWAY, NJ, USA, 18 October 2010, pages 4617-4624 presents a model that is capable of synchronizing expressive gestures with speech. The model, implemented on a Honda humanoid robot, can generate a full range of gesture types, such as emblems, iconic and metaphoric gestures, deictic pointing and beat gestures. Arbitrary input text is analyzed with a part-of-speech tagger and a text-to-speech engine for timing information of spoken words. In addition, style tags can be optionally added to specify the level of excitement or topic changes. The text, combined with any tags, is then processed by several grammars, one for each gesture type to produce several candidate gestures for each word of the text. The model then selects probabilistically amongst the gesture types based on the desired degree of expressivity. Once a gesture type is selected, it coincides with a particular gesture template, consisting of trajectory curves that define the gesture. Speech timing patterns and style parameters are used to modulate the shape of the curve before it is sent to the whole body control system on the robot.
AMIR ALY ET AL: "A model for synthesizing a combined verbal and nonverbal behavior based on personality traits in human-robot interaction", HUMAN-ROBOT INTERACTION, IEEE PRESS, , PISCATAWAY, NJ, USA, 3 March 2013, pages 325-332 tries to map human verbal behavior to a corresponding combined robot verbal/nonverbal behavior based on the personality dimensions of the interacting human. The system estimates - first - human personality traits through a psycholinguistic analysis of the spoken language, then it uses PERSONAGE natural language generator that tries to generate a corresponding verbal language to the estimated personality traits. Gestures are generated by using BEAT toolkit, which performs a linguistic and contextual analysis of the generated language relying on rules derived from extensive research into human conversational behavior.
YUSUKE OKUNO ET AL: "Providing route directions: Design of robot's utterance, gesture and timing", HUMAN-ROBOT INTERACTION (HRI), 2009 4TH ACM/IEEE INTERNATIONAL CONFERENCE ON, IEEE, NEW YORK, NY, USA, 11 March 2009, pages 53-60 relates to providing route directions. In this complicated interaction, utterances are combined with gestures and pronounced with appropriate timing. A model for a robot is proposed that generates route directions by integrating three important crucial elements: utterances, gestures, and timing. The disclosed approach is different from previous studies in that the listener's perspective is emphasized. Gestures were designed based on the usefulness, although influenced by the basic structure of human gestures. Timing was not based on how humans speak, but modeled from how they listen.
Katsushi Ikeuchi et al.: "Describing upper body motions based on the Labanotation for learning-from-observation robots", URL: https://arxiv.org/abs/1609.05429, relates to a learning-from-observation paradigm, for a robot to automatically acquire what-to-do through observation of human performance.
SEO JU-HWAN et al.: "Autonomous Humanoid Robot Dance Generation System based on real-time music input", 2013 IEEE RO-MAN, IEEE, 26 August 2013 (2013-08-26), pages 204-209, ISSN: 1944-9445, DOI: 10.1109/ROMAN.2013.6628446 relates to a system which consists of two main parts: the first is a real-time beat extraction system for music; the second one is a system of dance motion for a humanoid robot. In the first part, music input is analyzed using EFT and peak-to-peak time duration in the low frequency area is computed. In the second part, the process of making and synchronizing the dance motion of the humanoid robot is described.

### SUMMARY

It is the object of the present invention to enhance the generation of gestures by a robot.

The invention is set out in independent claims 1, 7 and 12. Preferred aspects of the invention are set out in the dependent claims.

According to the aspects of the present invention, there is provided a method apparatus and computer program product as defined in the accompanying claims.

Embodiments of the subject matter described herein provide a method, apparatus and computer program product for robot gesture generation. Generally speaking a concept corresponding to a utterance to be spoken by a robot is determined. After the concept is determined or selected, a symbolic representation of a gesture that corresponds to the determined concept is retrieved from a predetermined gesture library. Subsequently, the symbolic representation is provided to cause the robot to perform the gesture.

On the contrary to the conventional chatting robots, which may not be provided with any gesture responses along with the spoken utterances from chatting intelligence, or may only provide limited but not appropriate gesture function, embodiments of the present disclosure provide a method and an apparatus for robot gesture generation, especially in a chatting robot system, which enable a generation of appropriate gesture along with or in synchronization with the spoken utterances. In such way, a more natural, comprehensive and effective communication may be achieved between human and robots.

It is to be understood that the Summary is not intended to identify key or essential features of implementations of the subject matter described herein, nor is it intended to be used to limit the scope of the subject matter described herein. Other features of the subject matter described herein will become easily comprehensible through the description below.

### DESCRIPTION OF DRAWINGS

The above and other objectives, features and advantages of the subject matter described herein will become more apparent through more detailed depiction of example embodiments of the subject matter described herein in conjunction with the accompanying drawings, wherein in the example embodiments of the subject matter described herein, same reference numerals usually represent same components.
FIG. 1 is a schematic diagram illustrating a robot system in which example implementations of the subject matter described herein can be implemented.
FIG. 2 illustrates a flowchart of a method for robot gesture generation according to embodiments of the present disclosure.
FIG. 3A illustrates a schematic diagram of a typical labanotation and the corresponding concept represented by the labanotation according to embodiments of the present disclosure.
FIG. 3B illustrates example symbols of body parts of a robot.
FIG. 4 illustrates a flowchart of a process for mapping a utterance to a vector according to embodiments of the present disclosure.
FIG. 5 is a block diagram of an apparatus suitable for implementing one or more implementations of the subject matter described herein.

Throughout the drawings, the same or similar reference symbols are used to indicate the same or similar elements.

### DETAILED DESCRIPTION OF EMBODIEMTNS

Principles of the present disclosure will now be described with reference to several example embodiments shown in the drawings. Though example embodiments of the present disclosure are illustrated in the drawings, it is to be understood that the embodiments are described only to facilitate those skilled in the art in better understanding and thereby achieving the present disclosure, rather than to limit the scope of the disclosure in any manner.

As used herein, the phrase "include(s)" and its variants shall be interpreted as an open term meaning "including but not limited to." The phrase "based on" shall be interpreted as "at least partially based on." The term "a" is to be read as "one or more" unless otherwise specified. The phrase "an embodiment" or "one embodiment" shall be interpreted as "at least one embodiment." The phrase "another embodiment" shall be interpreted as "at least one other embodiment." The phrases like "first" and "second" may refer to different or the same objects. Other definitions might also be included explicitly and implicitly in the following description.

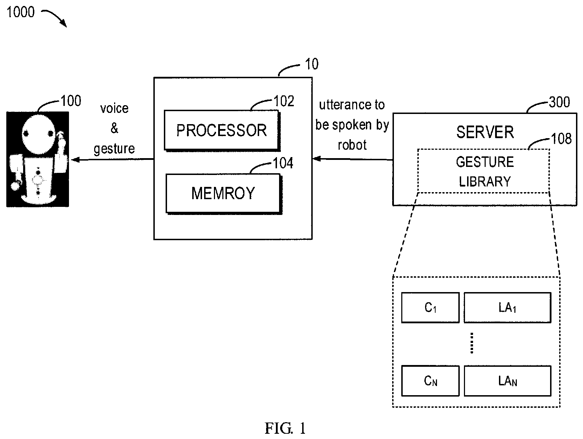

FIG. 1 illustrates a schematic diagram of a robot system 1000 according to embodiments of the present disclosure. As shown in FIG. 1, the robot system 1000 generally includes a robot 100, a server 300, and an apparatus 10 according to embodiments of present application. The apparatus 10 is used for generating appropriate gesture along with the spoken utterances, depending on the utterance to be spoken by the robot 100.

The robot 100 may be, for example, a chatting robot. The server 300 is usually a device capable of processing the received message and providing the processed information and may be in the form of a cloud-based computer, for example, a chatting intelligence for the case of a chatting robot. That is, a user may have a "conversation" with the chatting intelligence 300 through, for example, an audio-visual-tactile intelligence.

During a normal chatting process between a user (not shown) and the robot 100, the user may first make expressions or ask questions to the robot 100, and then expect to receive a response, such as an answer to the user's question, from the robot 100.

Conventionally, after the server 300 receives the expressions/utterances from the user via a robot, the processor associated with the server 300 may perform some analyses based on the received expressions/questions, and prepare accordingly a response or an answer to the expression that is to be spoken by the robot 100. However, as mentioned above, some conventional chatting robots are not provided with any motion or gesture functions. Some other conventional chatting robots, on the other hand, may be able to provide some gestures along with the spoken utterances, these gestures, however, may not be appropriate/correct ones, and for most of cases, these generated gestures may just be random ones.

According to various embodiments of the present application, an appropriate gesture response to the user along with or in synchronization with the voice output from the robot 100 can be achieved. In other words, a translation mechanism from spoken language to gestures can be realized. Furthermore, due to the fact that those gestures are generated based on the to-be-spoken utterances, or at least based on some concepts extracted from those utterances, the generated gesture in such a way would be more accurate and natural.

For the sake of discussions, example implementations of the subject matter described herein will be described with reference to the robot system 1000. However, it is to be understood that such a robot system 1000 is described merely for the purpose of illustration, without suggesting any limitations as to the scope of the subject matter described herein. For example, the ideas and principles are applicable to a stand-alone machine as well.

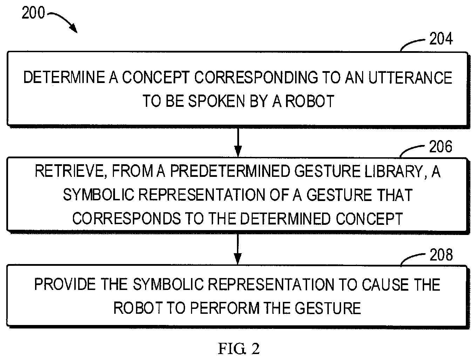

FIG. 2 illustrates a flow chart of a method 200 for robot gesture generation according to embodiments of the present disclosure. The method 200 can be executed, for example, on the apparatus 10 as illustrated in FIG. 1. The apparatus 10 as shown can be a client device or a cloud-based apparatus, or it can be part of the server 300 as illustrated in FIG. 1. It should be understood that the method 200 may also include additional actions not shown and/or omit the illustrated steps. Scope of the subject matter described herein is not limited in this aspect.

The method 200 will be described as below with reference to FIG. 1, FIG. 3 and FIG. 4. At 204, one or more concepts (C₁, C₂,..., C_{N}) corresponding to a utterance to be spoken by a robot 100 are determined. The utterance that is to be spoken by the robot 100 may be a proactive or responsive vocal interaction in a conversation with the user. It may be a bit of spoken language from a word, a phrase, a plurality of words to a full utterance. It is to be noted that although the utterance to be spoken as illustrated in FIG. 1 is received from the server 300, in some other embodiments, the utterance can be instead obtained directly from the apparatus 10.

As mentioned above, in some embodiments, the user may first make an expression/question to the robot 100 and further to the server 300 by, for example, transmitting his/her voice via a microphone and his/her image via a camera integrated on the robot 100. After the server 300 receives the expression/question from the user, the processor (not shown) associated with the server 300 will perform analyses based on the received expressions, and prepare a utterance that is to be spoken by the robot 100 accordingly, as a response or an answer to that question.

In some embodiments, the incoming expression/question from the user will be firstly checked locally. If it is included in a special set, or in other words, if it is one of special conversations, then an answer to this expression/question will be prepared in local. If not, the incoming expression/question will be further sent to the server 300 for a response.

In this context of the subject matter described herein, a concept is generally defined as one representative extracted from a cluster of words. The cluster of words may contain those words that share the same or a similar meaning within a context and thus are located in close proximity to one another in a vector space. Typical concepts may include, for example, "*Hello*," "*Good*," "*Thanks*," "*Hungry*," and so on. It is to be noted that scope of the subject matter described herein is not limited in the formats or contents included in the concepts. Users may define other particular concepts as needed.

The robot system 1000 as illustrated in FIG. 1 includes a gesture library 108 which is created to store a plurality of predetermined gestures and the corresponding concepts. Each concept that corresponds to a gesture in the gesture library 108 is represented by a first vector. In this case, determining the concept (C₁, C₂,..., C_{N}) corresponding to the utterance includes obtaining a second vector representing the utterance, and then determining the similarity degrees of the second vector to the plurality of first vectors. In this way, based on the determined similarity degrees, the concept corresponding to the utterance is selected from the plurality of concepts stored in the gesture library 108.

In an example embodiment, the received utterance or expression may be first given to a system, such as "distributed word embedding" system, to convert the utterance to a vector and thus map to a concept. Next, by examining the similarity degree between the vector converted from the utterance and each of those vectors from the gesture library 108, the concept having a maximum similarity degree may be selected from the plurality of concepts, as the determined concept corresponding to the utterance.

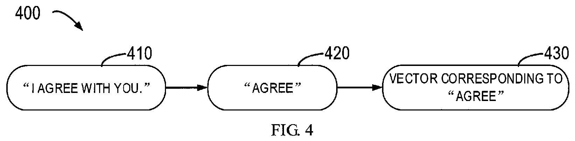

FIG. 4 shows an example illustrating a process 400 of conversion from an utterance to a vector. As shown in FIG. 4, the utterance 410 that is to be spoken by the robot 100 is "*I agree with you*," and the "distributed word embedding" system may determine the best matched concept 420, for example to be "*agree*," and then the concept "*Agree*" will be mapped to a corresponding vector 430 for comparison with those vectors stored in the gesture library 108. It is to be understood that although this example only describes a word-based matching mechanism (that is, based on a word-level similarity), the concept matching based on other levels of similarities, such as a phrase-level similarity, a sentence-level similarity, a document-level similarity and even a semantic-level similarity, are also possible.

Continuing to refer to FIG. 1, at 206, a symbolic representation (SR₁, SR₂,..., SR_{N}) of a gesture that corresponds to the determined concept (C₁, C₂,..., C_{N}) is retrieved from the predetermined gesture library 108.

In some embodiments, the gesture library 108 may be previously created by using a so-called "learning from observation" technique. In particular, a gesture of the robot 100 needs to be recorded first. The gesture is usually performed by a performer (for example, a human) in front of a camera in association with the robot 100. Some important poses from the performer then can be captured or "observed" by the camera and subsequently converted into symbolic representations (also called symbols for short) that correspond to the performed gesture. Retrieving the symbolic representation (SR₁, SR₂,..., SR_{N}) includes retrieving a labanotation (LA₁, LA₂,..., LA_{N}). Consequently, with the obtained labanotation, a relationship between the labanotation representing the performed gesture and a concept (e.g. labanotation-concept pairs) can be established and stored in the gesture library 108 for a future use.

Labanotation has been used for recording human dances. Labanotation herein particularly defines orientations of at least one body part of the robot 100 with respect to a plurality of time slots. According to the inventor's observation, the labanotation employed in the robot system 1000 is necessary and sufficient condition to describe human actions. This is because, watching the same dance by several dancers end up with the same labanotation, and on the other hand, from one labanotation, any dancer may perform/reconstruct the same dance.

Furthermore, labanotation is machine-independent (or hardware-independent), and thereby can overcome the hardware difference. In addition, as a concise symbolic representation, it is easy to transmit labanotation between a robot and the cloud computer through limited communication channels. Also, labanotation requires smaller memory than other types of representations.

In some embodiments, through a continuously captured/recorded gesture, orientations of the at least one body part of the robot 100 in the plurality of time slots 301 can be determined, and then symbols corresponding the orientations can be obtained. After that, the symbols in association with the corresponding time slots 301 as a part of the labanotation can be saved.

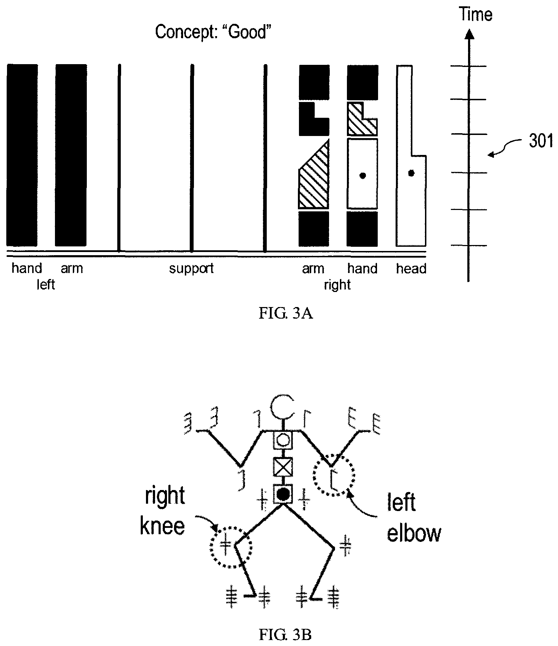

In some embodiments, the at least one body part includes a plurality of body parts, and the labanotation includes a first dimension corresponding to the plurality of time slots 301 and a second dimension corresponding to the plurality of body parts (that is, two-dimensional labanotation). FIG. 3A illustrated such a 2D labanotation representative of a concept of "Good". In this labanotation, each of columns (that is, the second dimension) corresponds to one specific body part, such as left hand, left arm, support, right arm, right hand, head. Each row (that is, the first dimension) corresponds to the time slots 301 with a given duration. Further, a symbol represents to which direction that the body part is oriented at that time.

It is to be noted that the sample labanotation in FIG. 3A is merely shown for purpose of illustration without suggesting any limitation as to the scope of the subject matter described herein. In other words, a more complicated labanotation with more body parts involved, such as left elbow or right knee (labeled by dotted circles) as shown in FIG. 3B is also possible.

Alternatively or additionally, for the previously created the gesture library 108, a plurality of labanotations of a plurality of gestures can be grouped into a cluster of labanotation, and for each cluster of labanotation, a representative labanotation can be determined. In this case, among multiple labanotations, similar labanotations indicating similar gestures can be clustered/grouped. As a result, a cluster of labanotation/gestures (rather than a single labanotation/gesture) is represented by a representative labanotation. In this way, it is guaranteed that any concepts corresponding to a same cluster will give a same gesture.

Compared to the gesture library 108 containing "one-to-one" concept-labanotation pairs, the gesture library 108 created in such an alternative way described as above contains "multiple-to-one" concepts to labanotation matches. Accordingly, retrieving, from the predetermined gesture library 108, a symbolic representation (SR₁, SR₂,..., SR_{N}) of a gesture that corresponds to the determined concept (C₁, C₂,..., C_{N}) includes obtaining a second vector representing the utterance, and determining similarity degrees of the second vector to the plurality of first vectors, and then selecting, from the plurality of concepts, the concept corresponding to the utterance based on the similarity degrees. With the selected concept, the retrieving step further includes determining a cluster of symbolic representation to which the selected concept corresponds, for example based upon the similarity of labanotations, and then retrieving, from the cluster of symbolic representation, a representative symbolic representation stored in the gesture library 108.

At 208, the symbolic representation is provided to cause the robot 100 to perform the gesture. Causing the robot 100 to perform the gesture includes executing the labanotation along the first dimension to trigger the plurality of body parts to perform the gesture according to the respective orientations in the plurality of time slots 301.

As shown in FIG. 3A, when executing the labanotation as shown in FIG. 3A, the time passes from the bottom to the top (as labeled by the arrow), and a specific combination of various symbols indicating the various orientations of multiple body parts at a given time slot 301 will be executed, so that the robot 100 can continuously perform the corresponding motion with respect to time.

The method 200 further includes a step of causing the robot 100 to speak the utterance in synchronization with the gesture. In this way, a more natural and smoother communication between a human and a robot can be achieved.

In some embodiments, the gesture library 108 or the labanotation may be stored at a remote server 200, such as a cloud computer, as illustrated in FIG. 1. In this case, the user may easily update gesture by editing/change the labanotation on the cloud computer, as required. This is quite helpful especially for avoiding user's boredom due to the repeated and same gestures every day. In other words, by changing the labanotation, the robot 100 is allowed to perform different gestures every day. Of course, it is also possible to store the gesture library 108 or the labanotation in local, for example, in the apparatus 10.

In some embodiments, only some part of the gesture library 108 is stored at a remote server 200, while some other part of the gesture library 108 is stored in local. As mentioned above, for some specialized conversations, specialized gestures as part of gesture library 108 can be designed using labanotation and saved locally, while for the random/general conversations, general gestures as the other part of the gesture library 108 will be stored at a remote server 200.

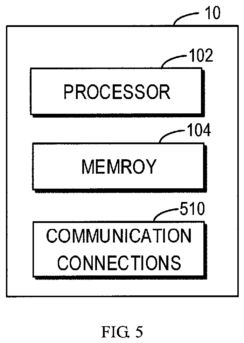

FIG. 5 is a block diagram of apparatus 10 suitable for implementing one or more implementations of the subject matter described herein. For example, the apparatus 10 may function as discussed above with reference to FIG. 1. It is to be understood that the apparatus 10 is not intended to suggest any limitation as to scope of use or functionality of the subject matter described herein, as various implementations may be implemented in diverse general-purpose or special-purpose computing environments.

As shown, the apparatus 10 includes at least one processing unit (also called processor) 102 and a memory 104. The processing unit 102 executes computer-executable instructions and may be a real or a virtual processor. In a multi-processing system, multiple processing units execute computer-executable instructions to increase processing power. The memory 104 may be volatile memory (e.g., registers, cache, RAM), non-volatile memory (e.g., ROM, EEPROM, flash memory), or some combination thereof.

In accordance with implementations of the subject matter described herein, the memory 104 is coupled to the processing unit 102 and storing instructions for execution by the processing unit 102. Those instructions, when executed by the processing unit 102, causes the apparatus 10 to: receive a utterance to be spoken by the robot 100; determine a concept (C₁, C₂,..., C_{N}) corresponding to the received utterance; retrieve, from predetermined gesture library 108, a symbolic representation (SR₁, SR₂,..., SR_{N}) of a gesture that is paired with the determined concept (C₁, C₂,..., C_{N}); and cause the robot 100 to execute the symbolic representation to perform the gesture.

In the example shown in FIG. 4, the apparatus 10 further includes one or more communication connections 510. An interconnection mechanism (not shown) such as a bus, controller, or network interconnects the components of the apparatus 10. Typically, operating system software (not shown) provides an operating environment for other software executing in the apparatus 10, and coordinates activities of the components of the apparatus 10.

The communication connection(s) 510 enables communication over a communication medium to another computing entity. Additionally, functionality of the components of the apparatus 10 may be implemented in a single computing machine or in multiple computing machines that are able to communicate over communication connections. Thus, the apparatus 10 may operate in a networked environment (for example, the robot system environment 1000) using logical connections to one or more other servers, network PCs, or another common network node. By way of example, and not limitation, communication media include wired or wireless networking techniques.

## Claims

1. A computer-implemented method for robot gesture generation, comprising:
determining (204) a concept (C₁, C₂,..., C_{N}) corresponding to an utterance to be spoken by a robot (100), wherein the concept is one representative extracted from a cluster of words, the cluster of words containing words that share a same or similar meaning within a context;
retrieving (206), from a predetermined gesture library (108), a symbolic representation (SR₁, SR₂,..., SR_{N}) of a gesture that corresponds to the determined concept (C₁, C₂,..., C_{N}) by retrieving a labanotation (LA₁, LA₂,...,LA_{N}) defining orientations of at least one body part of the robot (100) with respect to a plurality of time slots (301);
providing (208) the symbolic representation (SR₁, SR₂,..., SR_{N}) to cause the robot (100) to perform the gesture by executing the labanotation to trigger the at least one body part of the robot (100) to perform the gesture according to the respective orientations in the plurality of time slots;
causing the robot (100) to speak the utterance in synchronization with the gesture,
wherein the gesture library (108) is configured to store the plurality of predetermined gestures and a plurality of corresponding concepts, the gesture library further including a plurality of first vectors representing the plurality of corresponding concepts, respectively, and
wherein the determining the concept includes:
obtaining a second vector representing the utterance;
determining similarity degrees of the second vector to the plurality of first vectors; and
selecting, from the plurality of corresponding concepts, the concept corresponding to the utterance based on the similarity degrees.

2. The method of claim 1, further comprising creating the gesture library (108) by:
capturing a gesture of a performer;
determining, from the captured gesture, orientations of at least one body part of the performer in the plurality of time slots (301);
generating symbols representing the orientations in association with the corresponding time slots (301) as a part of the labanotation; and
relating the labanotation to a concept.

3. The method of claim 2, further comprising:
grouping a plurality of labanotations into a cluster of labanotation; and
determining, from the cluster of labanotation, a representative labanotation.

4. The method of claim 3, wherein retrieving, from the predetermined gesture library (108), the symbolic representation (SR₁, SR₂,...,SR_{N}) of the gesture that corresponds to the determined concept (C₁, C₂,..., C_{N}) comprises:
determining a cluster of symbolic representation to which the selected concept corresponds; and
retrieving, from the cluster of symbolic representation, a representative symbolic representation.

5. The method of any preceding claim, wherein at least a part of the gesture library (108) is stored at a remote server (200).

6. The method of any preceding claim, wherein the at least one body part includes a plurality of body parts, and the labanotation includes a first dimension corresponding to the plurality of time slots (301) and a second dimension corresponding to the plurality of body parts.

7. An apparatus (10) for robot gesture generation, comprising:
a processing unit (102); and
a memory (104) coupled to the processing unit (102) and storing instructions for execution by the processing unit, the instructions, when executed by the processing unit (102), causing the apparatus to:
determine (204) a concept (C₁, C₂,..., C_{N}) corresponding to a received utterance to be spoken by a robot (100), wherein the concept is one representative extracted from a cluster of words, the cluster of words containing words that share a same or similar meaning within a context;
retrieve (206), from a predetermined gesture library (108), a symbolic representation (SR₁, SR₂, ..., SR_{N}) of a gesture that corresponds to the determined concept (C₁, C₂,..., C_{N}) by retrieving a labanotation (LA₁, LA₂,...,LA_{N}) defining orientations of at least one body part of the robot (100) with respect to a plurality of time slots (301); and
provide (208) the symbolic representation (SR₁, SR₂,..., SR_{N}) to cause the robot (100) to perform the gesture by executing the labanotation to trigger the at least one body part of the robot (100) to perform the gesture according to the respective orientations in the plurality of time slots;
causing the robot (100) to speak the utterance in synchronization with the gesture,
wherein the gesture library (108) is configured to store the plurality of predetermined gestures and a plurality of corresponding concepts, the gesture library further including a plurality of first vectors representing the plurality of corresponding concepts, respectively, and
wherein the determining the concept includes:
obtaining a second vector representing the utterance;
determining similarity degrees of the second vector to the plurality of first vectors; and
selecting, from the plurality of corresponding concepts, the concept corresponding to the utterance based on the similarity degrees.

8. The apparatus (10) of claim 7, wherein the apparatus is further configured to create the gesture library (108) by:
capturing a gesture of a performer;
determining, from the captured gesture, orientations of at least one body part of the performer in the plurality of time slots (301);
generating symbols representing the orientations in association with the corresponding time slots (301) as a part of the labanotation; and
relating the labanotation to a concept.

9. The apparatus (10) of claim 7 or claim 8, wherein the apparatus is further configured to group a plurality of labanotations into a cluster of labanotation; and
determine, from the cluster of labanotation, a representative labanotation.

10. The apparatus of claim 9, wherein the retrieving, from the predetermined gesture library (108), the symbolic representation (SR₁, SR₂,...,SR_{N}) of the gesture that corresponds to the determined concept (C₁, C₂,..., C_{N}) comprises:
determining a cluster of symbolic representation to which the selected concept corresponds; and
retrieving, from the cluster of symbolic representation, a representative labanotation.

11. The apparatus (10) of any one of claims 7 to 10, wherein the at least one body part includes a plurality of body parts, and the labanotation includes a first dimension corresponding to the plurality of time slots (301) and a second dimension corresponding to the plurality of body parts.

12. A computer program product comprising instructions, which, when executed by a computer, cause the computer to carry out the method steps of any one of claims 1 to 6.

## Patentansprüche

1. Computerimplementiertes Verfahren zum Erzeugen von Robotergesten, umfassend:
Bestimmen (204) eines Konzeptes (C₁, C₂, ..., C_{N}), das einer von einem Roboter (100) zu sprechenden Äußerung entspricht, wobei das Konzept ein repräsentatives Element ist, das aus einem Wortcluster extrahiert wird, wobei der Wortcluster Wörter enthält, die innerhalb eines Kontextes dieselbe oder eine ähnliche Bedeutung haben;
Abrufen (206), aus einer vorbestimmten Gestenbibliothek (108), einer symbolischen Darstellung (SR₁, SR₂, ... , SR_{N}) einer Geste, die dem bestimmten Konzept (C₁, C₂, ..., C_{N}) entspricht, indem eine Labanotation (LA₁, LA₂, ..., LA_{N}) abgerufen wird, die die Ausrichtungen wenigstens eines Körperteils des Roboters (100) in Bezug auf eine Vielzahl von Zeitschlitzen (301) definiert;
Bereitstellen (208) der symbolischen Darstellung (SR₁, SR₂, ..., SR_{N}), um den Roboter (100) dazu zu veranlassen, die Geste auszuführen, indem die Labanotation ausgeführt wird, um wenigstens ein Körperteil des Roboters (100) auszulösen, damit dieser die Geste gemäß den jeweiligen Ausrichtungen in der Vielzahl von Zeitschlitzen ausführt;
Veranlassen des Roboters (100), die Äußerung synchron mit der Geste auszusprechen, wobei die Gestenbibliothek (108) dazu eingerichtet ist, die Vielzahl vorbestimmter Gesten und eine Vielzahl entsprechender Konzepte zu speichern, und die Gestenbibliothek weiterhin eine Vielzahl erster Vektoren umfasst, die jeweils die Vielzahl entsprechender Konzepte darstellen,
wobei das Bestimmen des Konzeptes umfasst:
Ermitteln eines zweiten Vektors, der die Äußerung darstellt;
Bestimmen der Ähnlichkeitsgrade des zweiten Vektors zu der Vielzahl der ersten Vektoren; und
Auswählen des der Äußerung entsprechenden Konzeptes aus der Vielzahl der entsprechenden Konzepte auf der Grundlage der Ähnlichkeitsgrade.

2. Verfahren nach Anspruch 1, weiterhin umfassend das Erstellen der Gestenbibliothek (108) durch:
Erfassen einer Geste eines Ausführenden;
Bestimmen von Ausrichtungen wenigstens eines Körperteils des Ausführenden in der Vielzahl von Zeitschlitzen (301) anhand der erfassten Geste;
Erzeugen von Symbolen, die die Ausrichtungen in Verbindung mit den entsprechenden Zeitschlitzen (301) als Teil der Labanotation darstellen; und
Zuordnen der Labanotation zu einem Konzept.

3. Verfahren nach Anspruch 2, weiterhin umfassend:
Gruppieren einer Vielzahl von Labanotationen zu einem Labanotationscluster; und
Bestimmen einer repräsentativen Labanotation aus dem Labanotationscluster.

4. Verfahren nach Anspruch 3, bei dem das Abrufen der symbolischen Darstellung (SR₁, SR₂, ..., SR_{N}) der Geste, die dem bestimmten Konzept (C₁, C₂, ..., C_{N}) entspricht, aus der vorbestimmten Gestenbibliothek (108) umfasst:
Bestimmen eines Clusters symbolischer Darstellungen, dem das ausgewählte Konzept entspricht; und
Abrufen einer repräsentativen symbolischen Darstellung aus dem Cluster symbolischer Darstellungen.

5. Verfahren nach einem der vorstehenden Ansprüche, bei dem wenigstens ein Teil der Gestenbibliothek (108) auf einem entfernten Server (200) gespeichert ist.

6. Verfahren nach einem der vorstehenden Ansprüche, bei dem das wenigstens eine Körperteil eine Vielzahl von Körperteilen umfasst und die Labanotation eine erste Dimension, die der Vielzahl von Zeitschlitzen (301) entspricht, und eine zweite Dimension, die der Vielzahl von Körperteilen entspricht, umfasst.

7. Gerät (10) zum Erzeugen von Robotergesten, umfassend:
eine Verarbeitungseinheit (102); und
einen Speicher (104), der mit der Verarbeitungseinheit (102) gekoppelt ist und Anweisungen zur Ausführung durch die Verarbeitungseinheit speichert, wobei die Anweisungen, wenn sie von der Verarbeitungseinheit (102) ausgeführt werden, das Gerät veranlassen zum:
Bestimmen (204) eines Konzeptes (C₁, C₂, ..., C_{N}), das einer empfangenen Äußerung entspricht, die von einem Roboter (100) zu sprechen ist, wobei das Konzept ein repräsentatives Element ist, das aus einem Wortcluster extrahiert wird, wobei der Wortcluster Wörter enthält, die innerhalb eines Kontextes dieselbe oder eine ähnliche Bedeutung haben;
Abrufen (206), aus einer vorbestimmten Gestenbibliothek (108), einer symbolischen Darstellung (SR₁, SR₂, ... , SR_{N}) einer Geste, die dem bestimmten Konzept (C₁, C₂, ..., C_{N}) entspricht, indem eine Labanotation (LA₁, LA₂, ..., LA_{N}) abgerufen wird, die die Ausrichtungen wenigstens eines Körperteils des Roboters (100) in Bezug auf eine Vielzahl von Zeitschlitzen (301) definiert; und
Bereitstellen (208) der symbolischen Darstellung (SR₁, SR₂, ..., SR_{N}), um den Roboter (100) dazu zu veranlassen, die Geste auszuführen, indem die Labanotation ausgeführt wird, um wenigstens ein Körperteil des Roboters (100) auszulösen, damit dieser die Geste gemäß den jeweiligen Ausrichtungen in der Vielzahl von Zeitschlitzen ausführt;
Veranlassen des Roboters (100), die Äußerung synchron mit der Geste auszusprechen, wobei die Gestenbibliothek (108) dazu eingerichtet ist, die Vielzahl vorbestimmter Gesten und eine Vielzahl entsprechender Konzepte zu speichern, und die Gestenbibliothek weiterhin eine Vielzahl erster Vektoren umfasst, die jeweils die Vielzahl entsprechender Konzepte darstellen,
wobei das Bestimmen des Konzeptes umfasst:
Ermitteln eines zweiten Vektors, der die Äußerung darstellt;
Bestimmen der Ähnlichkeitsgrade des zweiten Vektors zu der Vielzahl der ersten Vektoren; und
Auswählen des der Äußerung entsprechenden Konzeptes aus der Vielzahl der entsprechenden Konzepte auf der Grundlage der Ähnlichkeitsgrade.

8. Gerät (10) nach Anspruch 7, wobei das Gerät weiterhin dazu eingerichtet ist, die Gestenbibliothek (108) zu erstellen, durch:
Erfassen einer Geste eines Ausführenden;
Bestimmen von Ausrichtungen wenigstens eines Körperteils des Ausführenden in der Vielzahl von Zeitschlitzen (301) anhand der erfassten Geste;
Erzeugen von Symbolen, die die Ausrichtungen in Verbindung mit den entsprechenden Zeitschlitzen (301) als Teil der Labanotation darstellen; und
Zuordnen der Labanotation zu einem Konzept.

9. Gerät (10) nach Anspruch 7 oder Anspruch 8, wobei das Gerät weiterhin dazu eingerichtet ist, eine Vielzahl von Labanotationen zu einem Labanotationscluster zu gruppieren; und
aus dem Labanotationscluster eine repräsentative Labanotation zu bestimmen.

10. Gerät nach Anspruch 9, bei dem das Abrufen der symbolischen Darstellung (SR₁, SR₂, ..., SR_{N}) der Geste, die dem bestimmten Konzept (C₁, C₂, ..., C_{N}) entspricht, aus der vorbestimmten Gestenbibliothek (108) umfasst:
Bestimmen eines Clusters symbolischer Darstellungen, dem das ausgewählte Konzept entspricht; und
Abrufen einer repräsentativen symbolischen Darstellung aus dem Cluster symbolischer Darstellungen.

11. Gerät (10) nach einem der Ansprüche 7 bis 10, bei dem das wenigstens eine Körperteil eine Vielzahl von Körperteilen umfasst und die Labanotation eine erste Dimension, die der Vielzahl von Zeitschlitzen (301) entspricht, und eine zweite Dimension, die der Vielzahl von Körperteilen entspricht, umfasst.

12. Computerprogrammerzeugnis, das Anweisungen umfasst, die, wenn sie von einem Computer ausgeführt werden, den Computer veranlassen, die Schritte des Verfahrens nach einem der Ansprüche 1 bis 6 durchzuführen.

## Revendications

1. Procédé mis en œuvre par ordinateur pour la génération de gestes robotiques, comprenant :
la détermination (204) d'un concept (C₁, C₂, ..., C_{N}) correspondant à une phrase devant être prononcée par un robot (100), dans lequel le concept est un concept représentatif extrait d'un groupe de mots, ce groupe de mots contenant des mots qui partagent une signification identique ou similaire dans un contexte donné ;
la récupération (206), à partir d'une bibliothèque de gestes (108) prédéterminée, d'une représentation symbolique (SR₁, SR₂, ..., SR_{N}) d'un geste qui correspond au concept (C₁, C₂, ..., C_{N}) déterminé en récupérant une cinétographie Laban (LA₁, LA₂, ..., LA_{N}) définissant les orientations d'au moins une partie du corps du robot (100) par rapport à une pluralité de tranches de temps (301) ;
la fourniture (208) de la représentation symbolique (SR₁, SR₂, ..., SR_{N}) pour amener le robot (100) à effectuer le geste en exécutant la cinétographie Laban pour déclencher la réalisation du geste par l'au moins une partie du corps du robot (100) selon les orientations respectives dans la pluralité de tranches de temps ;
le fait d'amener le robot (100) à prononcer l'énoncé en synchronisation avec le geste,
dans lequel la bibliothèque de gestes (108) est configurée pour stocker la pluralité de gestes prédéterminés et une pluralité de concepts correspondants, la bibliothèque de gestes incluant en outre une pluralité de premiers vecteurs représentant respectivement la pluralité de concepts correspondants, et
dans lequel la détermination du concept inclut :
l'obtention d'un deuxième vecteur représentant l'énoncé ;
la détermination des degrés de similarité entre le deuxième vecteur et la pluralité de premiers vecteurs ; et
la sélection, parmi la pluralité de concepts correspondants, du concept correspondant à l'énoncé sur la base des degrés de similarité.

2. Procédé selon la revendication 1, comprenant en outre la création de la bibliothèque de gestes (108) par :
la capture d'un geste d'un interprète ;
la détermination, à partir du geste capturé, des orientations d'au moins une partie du corps de l'interprète dans la pluralité de tranches de temps (301) ;
la génération de symboles représentant les orientations en association avec les tranches de temps (301) correspondantes dans le cadre de la cinétographie Laban ; et
l'association de la cinétographie Laban à un concept.

3. Procédé selon la revendication 2, comprenant en outre :
le regroupement d'une pluralité de cinétographies Laban en un ensemble de cinétographies Laban ; et
la détermination, à partir de l'ensemble de cinétographies Laban, d'une cinétographie Laban représentative.

4. Procédé selon la revendication 3, dans lequel la récupération, à partir de la bibliothèque de gestes (108) prédéterminée, de la représentation symbolique (SR₁, SR₂, ..., SR_{N}) du geste qui correspond au concept (C₁, C₂, ..., C_{N}) déterminé comprend :
la détermination d'un groupe de représentations symboliques auquel correspond le concept sélectionné ; et
la récupération, à partir dudit groupe de représentations symboliques, d'une représentation symbolique représentative.

5. Procédé selon l'une quelconque des revendications précédentes, dans lequel au moins une partie de la bibliothèque de gestes (108) est stockée sur un serveur distant (200).

6. Procédé selon l'une quelconque des revendications précédentes, dans lequel l'au moins une partie du corps inclut une pluralité de parties du corps, et la cinétographie Laban inclut une première dimension correspondant à la pluralité de tranches de temps (301) et une deuxième dimension correspondant à la pluralité de parties du corps.

7. Appareil (10) destiné à la génération de gestes robotiques, comprenant :
une unité de traitement (102) ; et
une mémoire (104) couplée à l'unité de traitement (102) et stockant des instructions destinées à être exécutées par l'unité de traitement, lesdites instructions, lorsqu'elles sont exécutées par l'unité de traitement (102), amenant le dispositif à :
déterminer (204) un concept (C₁, C₂, ..., C_{N}) correspondant à un énoncé reçu devant être prononcé par un robot (100), dans lequel le concept est un concept représentatif extrait d'un groupe de mots, ledit groupe de mots contenant des mots qui partagent une signification identique ou similaire dans un contexte donné ;
extraire (206), à partir d'une bibliothèque de gestes (108) prédéterminée, une représentation symbolique (SR₁, SR₂, ..., SR_{N}) d'un geste qui correspond au concept (C₁, C₂, ..., C_{N}) déterminé en récupérant une cinétographie Laban (LA₁, LA₂, ..., LA_{N}) définissant les orientations d'au moins une partie du corps du robot (100) par rapport à une pluralité de tranches de temps (301) ; et
fournir (208) la représentation symbolique (SR₁, SR₂, ..., SR_{N}) pour amener le robot (100) à effectuer le geste en exécutant la cinétographie Laban pour déclencher la réalisation du geste par l'au moins une partie du corps du robot (100) selon les orientations respectives dans la pluralité de tranches de temps ;
amener le robot (100) à prononcer l'énoncé en synchronisation avec le geste,
dans lequel la bibliothèque de gestes (108) est configurée pour stocker la pluralité de gestes prédéterminés et une pluralité de concepts correspondants, la bibliothèque de gestes incluant en outre une pluralité de premiers vecteurs représentant respectivement la pluralité de concepts correspondants, et
dans lequel la détermination du concept inclut :
l'obtention d'un deuxième vecteur représentant l'énoncé ;
la détermination des degrés de similarité entre le deuxième vecteur et la pluralité de premiers vecteurs ; et
la sélection, parmi la pluralité de concepts correspondants, du concept correspondant à l'énoncé sur la base des degrés de similarité.

8. Appareil (10) selon la revendication 7, dans lequel l'appareil est en outre configuré pour créer la bibliothèque de gestes (108) en :
capturer un geste d'un interprète ; :
déterminer, à partir du geste capturé, les orientations d'au moins une partie du corps de l'interprète dans la pluralité de tranches de temps (301) ;
générer des symboles représentant les orientations en association avec les tranches de temps (301) correspondantes dans le cadre de la cinétographie Laban ; et
associer la cinétographie Laban à un concept.

9. Appareil (10) selon la revendication 7 ou la revendication 8, dans lequel l'appareil est en outre configuré pour regrouper une pluralité de cinétographies Laban en un ensemble de cinétographies Laban ; et
déterminer, à partir de l'ensemble de cinétographies Laban, une cinétographie Laban représentative.

10. Appareil selon la revendication 9, dans lequel la récupération, à partir de la bibliothèque de gestes (108) prédéterminée, de la représentation symbolique (SR₁, SR₂, ..., SR_{N}) du geste qui correspond au concept (C₁, C₂, ..., C_{N}) déterminé comprend :
la détermination d'un groupe de représentations symboliques auquel correspond le concept sélectionné ; et :
la récupération, à partir du groupe de représentations symboliques, d'une cinétographie Laban représentative.

11. Appareil (10) selon l'une quelconque des revendications 7 à 10, dans lequel l'au moins une partie du corps inclut une pluralité de parties du corps, et la cinétographie Laban inclut une première dimension correspondant à la pluralité de tranches de temps (301) et une deuxième dimension correspondant à la pluralité de parties du corps.

12. Produit logiciel comprenant des instructions qui, lorsqu'elles sont exécutées par un ordinateur, amènent celui-ci à mettre en œuvre les étapes du procédé selon l'une quelconque des revendications 1 à 6.
